# EUROPÄISCHE PATENTSCHRIFT

(11) **EP 1 446 294 B1**
(45) Veröffentlichungstag und Bekanntmachung des Hinweises auf die Patenterteilung: **26.12.2007**
(21) Anmeldenummer: 02787486.6
(22) Anmeldetag: 15.10.2002
(51) Int. Cl.: B42D 15/10

(54) **SICHERHEITSELEMENT MIT BEUGUNGSSTRUKTUREN**
SECURITY ELEMENT WITH DIFFRACTION STRUCTURES
ELEMENT DE SECURITE A STRUCTURES DE DIFFRACTION

(30) Priorität: 23.11.2001 DE 10157534
(43) Veröffentlichungstag der Anmeldung: 18.08.2004
(73) Patentinhaber: OVD Kinegram AG, 6301 Zug (CH)
(72) Erfinder: WEITENEDER, Christoph, CH-2016 Cortaillod (CH); TOMPKIN, Wayne, Robert, CH-5400 Baden (CH); SCHILLING, Andreas, CH-6332 Hagendorn (CH)
(74) Vertreter: Zinsinger, Norbert
(86) Internationale Anmeldenummer: PCT/EP2002/011486
(87) Internationale Veröffentlichungsnummer: WO 2003/043832

(56) Entgegenhaltungen:
- EP-A- 0 105 099
- US-A- 5 956 164

## Beschreibung

Die Erfindung bezieht sich auf ein Sicherheitselement mit Beugungsstrukturen gemäss dem Oberbegriff des Anspruchs 1.

Solche Sicherheitselemente bestehen aus einem dünnen Schichtverbund aus Lack und/oder Kunststoff, wobei in den Schichtverbund wenigstens Reliefstrukturen aus der Gruppe Beugungsstrukturen, Licht streuende Strukturen und ebene Spiegelflächen eingebettet sind. Die aus dem dünnen Schichtverbund geschnittenen Sicherheitselemente werden auf Gegenstände zum Beglaubigen der Echtheit der Gegenstände geklebt.

Der Aufbau des dünnen Schichtverbunds und die dazu verwendbaren Materialien sind beispielsweise in der US 4,856,857 beschrieben. Aus der DE 33 08 831 A1 ist bekannt, den dünnen Schichtverbund mit Hilfe einer Trägerfolie auf den Gegenstand aufzubringen.

Derartige Sicherheitselemente weisen meist ein Muster aus mosaikartig zusammengesetzten, mit den mikroskopisch feinen Reliefstrukturen belegten Flächenelementen auf. Das Muster ändert sich in vorbestimmter Weise beim Kippen oder Drehen des Sicherheitselements. Ein solches Sicherheitselement ist aus der EP 0 105 099 A1 bekannt. Damit für einen Beobachter das Muster leicht zu erkennen ist und beim Kippen oder Drehen des Sicherheitselements als markantes variables Farbenspiel erscheint, haben die mikroskopisch feinen Reliefstrukturen der Flächenelemente das auf das Sicherheitselement einfallende Licht in die ersten paar Beugungsordnungen abzulenken. Die mikroskopisch feinen Reliefstrukturen, die diese Bedingung erfüllen, weisen Strukturelemente auf, die im Prinzip mit holographischen Mitteln kopiert werden können. Obwohl der Aufwand zum Herstellen einer Kopie gross ist, besteht dennoch ein Bedürfnis, nachgemachte bzw. kopierte Muster einfach erkennen zu können.

Ein Sicherheitselement gemäß dem Oberbegriff des Anspruchs 1 ist aus dem Dokument US-A- 5 956 164 bekannt.

Der Erfindung liegt die Aufgabe zugrunde, ein Sicherheitselement zu schaffen, das ein brillantes, beim Drehen oder Kippen variables Flächenmuster zeigt, schwer zu kopieren ist und dessen Echtheit mit einfachen Mitteln überprüfbar ist.

Die genannte Aufgabe wird erfindungsgemäss durch die im Kennzeichen des Anspruchs 1 angegebenen Merkmale gelöst. Vorteilhafte Ausgestaltungen der Erfindung ergeben sich aus den abhängigen Ansprüchen.

Ausführungsbeispiele der Erfindung sind in der Zeichnung dargestellt und werden im folgenden näher beschrieben.

Es zeigen:
- Figur 1: ein Sicherheitselement im Querschnitt,
- Figur 2: das Sicherheitselement in Draufsicht,
- Figur 3: eine erste Beugungsstruktur,
- Figur 4: eine zweite Beugungsstruktur,
- Figur 5: ein Flächenmuster bei Tageslicht,
- Figur 6: eine Beleuchtungseinrichtung,
- Figur 7: das Flächenmuster im s - polarisierten Licht,
- Figur 8: das Flächenmuster im p - polarisierten Licht,
- Figur 9: eine dritte Beugungsstruktur und
- Figur 10: eine vierte Beugungsstruktur .

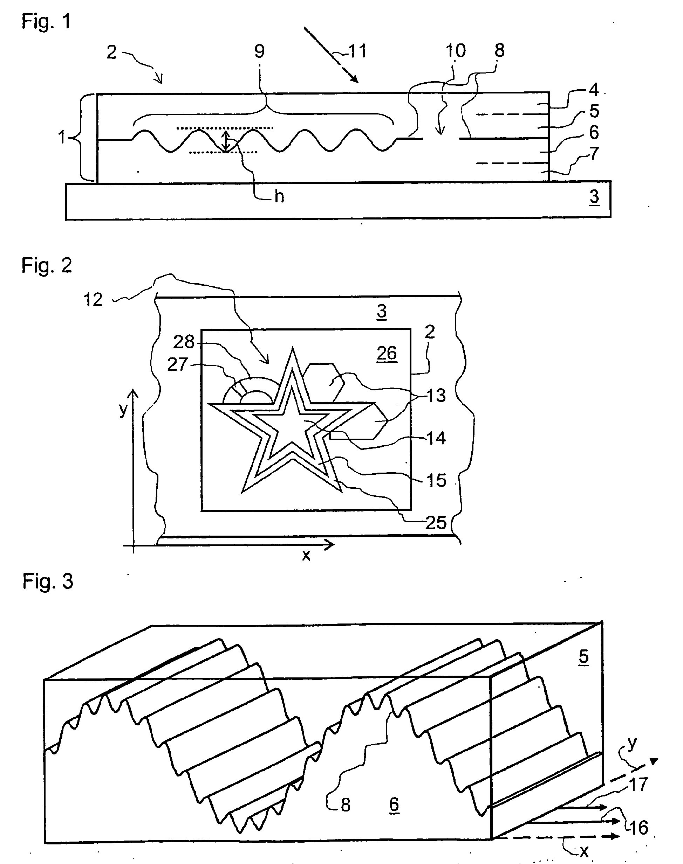

In der Figur 1 bezeichnet 1 einen Schichtverbund (Laminat), 2 ein Sicherheitselement, 3 ein Substrat, 4 eine Deckschicht, 5 eine Abformschicht, 6 eine Schutzschicht, 7 eine Kleberschicht, 8 eine reflektierende Grenzschicht, 9 eine optisch wirksame Struktur und 10 eine transparente Stelle in der reflektierenden Grenzschicht 8. Der Schichtverbund 1 besteht aus mehreren Lagen von verschiedenen, nacheinander auf eine hier nicht gezeigte Trägerfolie aufgebrachten Kunststoff- bzw. Lackschichten und umfasst in der angegebenen Reihenfolge typisch die Deckschicht 4, die Abformschicht 5, die Schutzschicht 6 und die Kleberschicht 7. Die Trägerfolie kann in einer Ausführungsform von der Deckschicht 4 selbst gebildet sein; in einer anderen Ausführungsform kann die Trägerfolie zum Applizieren des dünnen Schichtverbunds 1 auf das Substrat 3 dienen und wird danach vom Schichtverbund 1 entfernt, wie dies in der eingangs erwähnten DE 33 08 831 A1 beschrieben ist.

Die gemeinsame Berührungsfläche zwischen der Abformschicht 5 und der Schutzschicht 6 wird nachstehend als Grenzfläche 8 bezeichnet. In die Abformschicht 5 sind die optisch wirksamen Strukturen 9 eines optisch variablen Musters abgeformt. Da die Schutzschicht 6 die Täler der optisch wirksamen Strukturen 9 verfüllt, weist die Grenzfläche 8 die Form der optisch wirksamen Strukturen 9 auf. Um eine hohe Wirksamkeit der optisch wirksamen Strukturen 9 zu erhalten, ist die Grenzfläche 8 von einem Metallbelag, vorzugsweise aus Aluminium, Silber, Gold, Kupfer, Chrom oder Tantal gebildet, der die Abformschicht 5 und die Schutzschicht 6 trennt und infolge seiner elektrischen Leitfähigkeit ein hohes Reflexionsvermögen für sichtbares Licht an der Grenzfläche 8 bewirkt. Der Schichtverbund 1 wird als Kunststofflaminat in Form einer langen Folienbahn mit einer Vielzahl von nebeneinander angeordneten Kopien des optisch variablen Musters hergestellt. Aus der Folienbahn werden die Sicherheitselemente 2 beispielsweise ausgeschnitten und mittels der Kleberschicht 7 mit einem Substrat 3 verbunden. Das Substrat 3, meist in Form eines Dokuments, einer Banknote, einer Bankkarte, eines Ausweises oder eines anderen wichtigen bzw. wertvollen Gegenstandes, wird mit dem Sicherheitselement 2 versehen, um die Echtheit des Gegenstandes zu beglaubigen.

Wenigstens die Deckschicht 4 und die Abformschicht 5 sind transparent für sichtbares, auf das Sicherheitselement 2 einfallendes Licht 11. An der Grenzfläche 8 wird das einfallende Licht 11 reflektiert und durch die optisch wirksame Struktur 9 vorbestimmt abgelenkt. Als optisch wirksamen Struktur 9 dienen Beugungsgitter, lichtstreuende Reliefstrukturen oder ebene Spiegelflächen. In einigen Ausführungsformen des Sicherheitselements 2 sind die transparenten Stellen 10 in die Grenzfläche 8 eingelassen, an denen der reflektierende Metallbelag unterbrochen ist, damit unter dem Sicherheitselement 2 liegende, auf dem Substrat 3 befindliche Indicia durch das Sicherheitselement 2 hindurch erkennbar sind. Selbstverständlich sind bei diesen Ausführungsformen auch die Schutzschicht 6 und die Kleberschicht 7 transparent. In der eingangs erwähnten US 4, 856,857 sind verschiedene Ausführungsformen des Schichtverbunds 1 gezeigt und die dazu verwendbaren Materialien aufgelistet.

Die Figur 2 zeigt einen Ausschnitt des Substrats 3, das in einer von rechtwinkligen Koordinaten x, y aufgespannten Ebene liegt Das aus dem Kunststofflaminat ausgeschnittene und auf das Substrat 3 aufgeklebte Sicherheitselement 2 weist ein durch die Deckschicht 4 und die Abformschicht 5 (Fig. 1) hindurch sichtbares Flächenmuster 12 auf. Das Flächenmuster 12 ist mosaikartig aus Flächenelementen 13, 14, 15 zusammengesetzt. Die Flächenelemente 13, 14, 15 sind mit den optisch wirksamen Strukturen 9 belegt und reflektieren an der Grenzfläche 8 (Fig. 1) zwischen der Abformschicht 5 und der Schutzschicht 6 das durch die Schichten 4, 5 einfallende Licht 11 (Fig. 1). Die in den weiteren Flächenelementen 13 abgeformten optisch wirksamen Strukturen 9 sind Beugungsgitter, lichtstreuende Reliefstrukturen und/oder ebene Spiegelflächen und bilden das optisch variable Flächenmuster 12, das beispielsweise in der EP 0 105 099 A1 beschrieben ist. In einer Ausführungsform des optisch variablen Flächenmusters 12 grenzt wenigstens eine transparente Stelle 10 (Fig. 1) an wenigstens eines der Flächenelemente 13, 14, 15.

Wenigstens zwei Flächenelemente 14, 15 bilden ein zu überprüfendes Merkmal, mit dessen Hilfe eine Kopie des Sicherheitselements 2 von einem Original des Sicherheitselements 2 unterscheidbar ist. Jedes der beiden Flächenelemente 14, 15 weist eine sichtbares einfallendes Licht 11 beugende Struktur 9 mit einer optisch wirksamen Profilhöhe h (Fig. 1) auf, deren Relieffunktion eine Überlagerung von einer niederfrequenten Gitterstruktur G(x, y) mit einer hochfrequenten Reliefstruktur R(x, y) ist. Die niederfrequente Gitterstruktur G(x, y) weist ein bekanntes Profil auf, wie z.B. ein sinusförmiges, rechteckförmiges, ein symmetrisches bzw. asymmetrisches sägezahnförmiges Profil. Die hochfrequente Reliefstruktur R(x, y) weist eine Spatialfrequenz f_{R} von mindestens 2.500 Linien pro Millimeter auf. Die niederfrequente Gitterstruktur G(x, y) besitzt andererseits eine niedrige Gitter - Spatialfrequenz f_{G} von z.B. weniger als 1.000 Linien/Millimeter. Dabei ist zu beachten, dass die Relief - Spatialfrequenz f_{R} wenigstens zehnmal höher als die Gitter - Spatialfrequenz f_{G}. sein muss, um unerwünschte Modulationseffekte zu vermeiden. Vorzugsweise hat die Gitter - Spatialfrequenz f_{G} einen Wert zwischen 100 Linien/Millimeter bis 500 Linien/Millimeter.

Die Reliefstruktur R(x, y) allein ist ein Beugungsgitter, das wegen der hohen Relief - Spatialfrequenz f_{R} das einfallende Licht 11 nur in die nullte Ordnung beugt und dessen Profilform an sich unwesentlich ist. Das gebeugte Licht wird unter dem gleichen Winkel zurückgeworfen, wie ihn das einfallende Licht 11 zu einer Flächennormalen des Sicherheitselements 2 einschliesst, d.h. ein solches Beugungsgitter verhält sich wie ein Spiegel, nur dass abhängig von der optisch wirksamen Profilhöhe h_{R} bestimmte Carbon im Spektrum des gebeugten Lichts fehlen. Wegen der hohen Relief - Spatialfrequenz f_{R} sind die Beugungseffizienzen E_{TE}, E_{TM} der Reliefstruktur R(x, y) für TE und TM polarisiertes Licht in der Regel verschieden. Während das TE polarisierte Licht mit hoher Beugungseffizienz E_{TE} praktisch unabhängig von der optisch wirksamen Profilhöhe h_{R} an der Reliefstruktur R(x, y) gespiegelt wird, sinkt die Beugungseffizienz E_{TM} für das TM polarisierte Licht mit zunehmender Profilhöhe h_{R} schnell zu einem ersten Minimum ab, wo die Polarisationswirkung der Reliefstruktur R(x, y) auf das einfallende Licht 11 daher am stärksten ist. Liegen die Richtung des unpolarisiert einfallenden Lichts 11, die Flächennormale und der die Reliefstruktur R(x, y) beschreibende Vektor in einer Beugungsebene, so schwingt der elektrische Feldvektor des p - polarisierten Lichts parallel zu dieser Beugungsebene. Das p - polarisierte Licht wird daher von der Reliefstruktur R(x, y) absorbiert. Hingegen schwingt der elektrische Feldvektor des s - polarisierten Lichts senkrecht zur Beugungsebene und parallel zu den Relieffurchen der Reliefstruktur R(x, y). Das s - polarisierte Licht wird von der Reliefstruktur R(x, y) reflektiert. Ist die Reliefstruktur R(x, y) in ihrer Ebene um 90° gedreht, wobei nun die Relieffurchen der Reliefstruktur R(x, y) parallel zur Beugungsebene ausgerichtet sind, wird das s - polarisierte Licht absorbiert und das p - polarisierte Licht reflektiert. Das von der Reliefstruktur R(x, y) in die nullte Ordnung gebeugte Licht ist daher linear polarisiert, d.h. die Reliefstruktur R(x, y) wirkt für das unpolarisiert einfallende Licht 11 als Polarisator bzw. für das polarisiert einfallende Licht 11 als Analysator. Die optisch wirksame Relief - Profilhöhe h_{R} der Reliefstruktur R(x, y) ist in den Bereich mit hohem Polarisationsvermögen zu legen. Die optisch wirksame Relief - Profilhöhe h_{R} weist daher einen Wert aus dem Bereich von 150 nm bis 220 nm auf; vorzugsweise wird die optisch wirksame Relief - Profilhöhe h_{R} aber aus dem engeren Bereich von 170 nm bis 200 nm ausgewählt.

Die optisch wirksame Gitter - Profilhöhe h_{G} der Gitterstruktur G(x, y) ist grösser als die optisch wirksame Relief - Profilhöhe h_{R} zu wählen. Die optisch wirksame Gitter - Profilhohe h_{G} weist bevorzügt einen Wert aus dem Bereich von 250 nm bis 500 nm auf, wobei vorzugsweise für die optisch wirksame Gitter - Profilhöhe h_{G} der Wert einer halben Wellenlänge Odes einfallenden Lichts 11 gewählt wird. Dabei ist zu beachten, dass die Wellenlänge O in der Abformschicht 5 mit dem Faktor n verkleinert ist, wobei n der Brechungsindex des Materials der Abformschicht 5 ist. Der Brechungsindex n weist z.B. einen Wert von n = 1,55 auf. Aus dem gleichen Grund sind die in die Abformschicht 5 abgeformten geometrischen Profilhöhen um den Faktor n kleiner als die oben angeführten optisch wirksamen Profilhöhen h_{G}, h_{R} zu wählen. Die niederfrequente Gitterstruktur G(x, y) allein beugt das einfallende Licht 11 wenigstens in Abhängigkeit von der Gitter - Spatialfrequenz f_{G} in mehrere Beugungsordnungen.

Die Figur 3 zeigt einen Ausschnitt aus dem Schichtverbund 1 im ersten Flächenelement 14 (Fig. 2) mit der Abformschicht 5 und der Schutzschicht 6. Die Grenzfläche 8 ist durch die Beugungsstruktur B(x, y) geformt. Die Beugungsstruktur B(x, y) ist eine Funktion der rechtwinkligen Koordinaten x und y, die eine Grundfläche des Ausschnitts aus dem Schichtverbund 1 aufspannen. Die in der Figur 3 dargestellte Beugungsstruktur B(x) ist das Ergebnis einer additiven Überlagerung der sinusförmigen Gitterstruktur G(x) mit der sinusförmigen Reliefstruktur R(x), also B(x) = G(x) + R(x). Ein Gittervektor 16 der Gitterstruktur G(x) und ein Reliefvektor 17 der Reliefstruktur R(x) sind im wesentlichen parallel ausgerichtet. Diese Parallelität des Gittervektors 16 und des Reliefvektors 17 ist ein Merkmal der Beugungsstruktur B(x, y) im ersten Flächenelement 14 (Fig. 2).

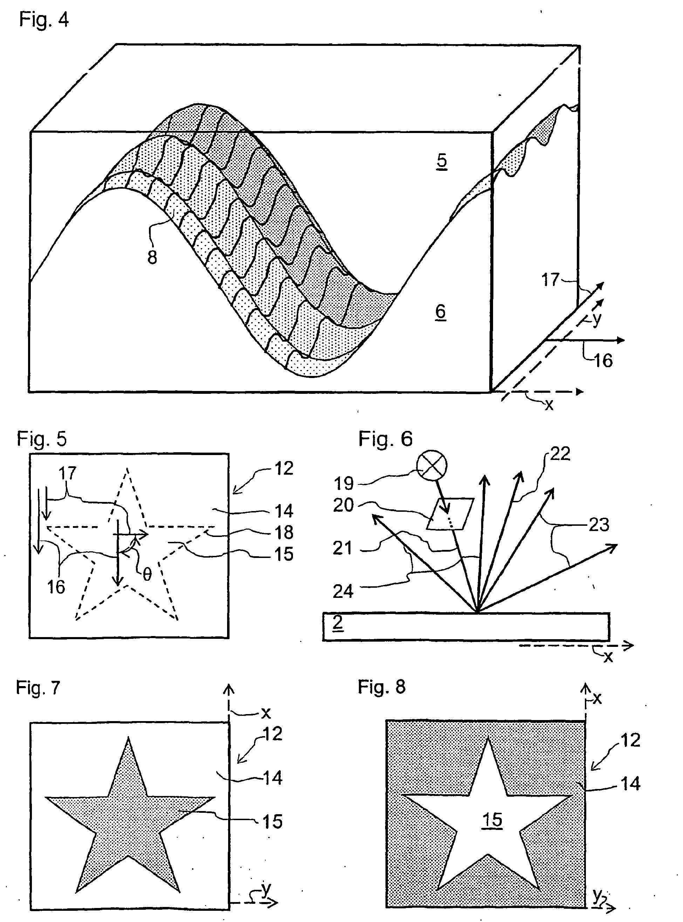

Die Figur 4 zeigt einen Ausschnitt aus dem Schichtverbund 1 im zweiten Flächenelement 15 (Fig. 2) mit der Grenzfläche 8 zwischen der Abformschicht 5 und der Schutzschicht 6. Der Gittervektor 16 und der Reliefvektor 17 sind in der Ebene der Koordinaten x und y orthogonal zueinander ausgerichtet. Beispielsweise ist die sinusförmige Gitterstruktur G(x) nur eine Funktion der Koordinate x, während die sinusförmige Reliefstruktur R(y) nur von der Koordinate y abhängig ist. Die additive Überlagerung der Gitterstruktur G(x) mit der Reliefstruktur R(y) ergibt die von beiden Koordinaton x, y abhängige Beugungsstruktur B(x, y), wobei B(x, y) = G(x) + R(y) ist. Aus rein darstellerischen Gründen ist in der Figur 4 die Grenzfläche 8 mit den hintereinander liegenden Tälern der Reliefstruktur R(y) mit verschieden dichten Punktrastem unterlegt. Ein Merkmal der Beugungsstruktur B(x, y) im zweiten Flächenelements 15 bildet der rechte Winkel zwischen dem Gittervektor 16 und dem Reliefvektor 17.

In der Figur 5 ist ein Flächenmuster 12 gezeigt, das nur aus dem ersten und dem zweiten Flächenelement 14, 15 besteht. In einer allgemeineren Form hängt die Beugungsstruktur B(x, y) von einem auf den Gittervektor 16 bezogenen Azimutwinkel T des Reliefvektors 17 ab, also B(x, y, T). Im ersten Flächenelement 14 stammt der Azimutwinkel aus dem Bereich T= 0° bis 30°, während im zweiten Flächenelement 15 der Azimutwinkel T einen Wert aus einem Bereich von etwa 60° bis 90° aufweist. Am ausgeprägtesten ist das weiter unten beschriebene Polarisationsverhalten, wenn der Azimutwinkel T exakt einen Wert von 0° bzw. von 90° hat. Um diesen Sachverhalt zu berücksichtigen, sind der Gittervektor 16 und der Reliefvektor 17 im ersten Flächenelement 14 im wesentlichen parallel, d.h. sie schliessen einen Wert des Azimutwinkels T von etwa 30° bis zum Vorzugswert 0° ein. Der verwendbare Azimutwinkel T im zweiten Flächenelement 15 ist ein im wesentlichen rechter Winkel, d.h. er weist einen Wert von etwa 60° bis zum Vorzugswert 90° auf.

Die Flächenmuster 12 mit den Beugungsstrukturen B(x, y, T) haben den Vorteil, dass mit holographischen Mitteln die Beugungsstrukturen B(x, y, T) ausgehend von einem Original des Sicherheitselements 2 (Fig. 1) nicht kopiert werden können. Eine holographische Kopie weist nämlich Strukturen auf, die das einfallende Licht 11 auf die gleiche Weise wie die niederfrequenten Gitterstrukturen G(x, y) beugen, jedoch fehlt die lichtpolarisierende Wirkung der hochfrequenten Reliefstrukturen R(x, y) auf das gebeugte Licht. Eine Überprüfung des Polarisationsvermögens erlaubt daher, Kopien vom Original zu unterscheiden.

Im ersten und im zweiten Flächenelement 14, 15 weisen die Gitterstrukturen G(x, y) gleiche Parameter auf. Die beiden Reliefstrukturen R(x, y) unterscheiden sich nur in der azimutalen Ausrichtung ihres Reliefvektors 17. Die beiden Beugungsstrukturen B(x, y, T = 0°) und B(x, y, T = 90°) beugen das einfallende Licht 11 (Fig. 1) und spalten das gebeugte Licht in mehreren Beugungsordnungen farbig auf. Die Wirkung der den Gitterstrukturen G(x, y) überlagerten Reliefstrukturen R(x, y) manifestiert sich in der dem Polarisationsvermögen der Reliefstrukturen R(x, y) entsprechenden linearen Polarisation des gebeugten Lichts. Damit für einen Beobachter das erste und das zweite Flächenelement 14, 15 gleichzeitig sichtbar sind, müssen der Gittervektor 16 im ersten Flächenelement 14 und der Gittervektor 16 im zweiten Flächenelement 15 im wesentlichen parallel ausgerichtet sein. Ist das auf das Flächenmuster 12 einfallende Licht 11 nicht linear polarisiert, wie dies bei der üblichen Beleuchtung bzw. bei Tageslicht der Fall ist, erscheinen beide Flächenelemente 14 und 15 für den Beobachter beiderseits einer gemeinsamen Berandung 18 gleich hell und in gleicher Farbe, d.h. der Kontrast zwischen den beiden Flächenelementen 14, 15 ist so klein, dass die gemeinsame Berandung 18 nicht erkennbar ist.

Die Figur 6 zeigt eine Beleuchtungseinrichtung zum Prüfen des Sicherheitselements 2. Die Beugungsebene ist in der Darstellung der Figur 6 die Zeichnungsebene und enthält die Flächennormale auf das Sicherheitselement 2 und die Koordinate x. Eine Lichtquelle 19 zur Erzeugung von fast weissem Licht wirft durch ein Polarisationsfilter 20 hindurch gebündeltes, linear polarisiertes Licht 21 parallel zur Beugungsebene auf das Flächenmuster 12 (Fig. 5) des Sicherheitselements 2. Ein Teil des polarisierten Lichts 21 wird als reflektiertes und/oder in die nullte Beugungsordnung gespiegeltes Licht in eine durch das Reflexionsgesetz vorbestimmte Reflexionsrichtung 22 abgelenkt. Ein weiterer Teil hingegen wird in positive Beugungsordnungen 23 und in negative Beugungsordnungen 24 gebeugt. Da die Beugungsstrukturen B(x, y, T = 0°) und B(x, y, T = 90°) ein verschiedenes Polarisationsverhalten aufweisen, sind die beiden Flächenelemente (14, 15) in linear polarisiertem Licht 21 unterscheidbar.

In der Figur 7 ist das Flächenmuster 12 mit s-polarisiertem Licht 21 (Fig. 6) beleuchtet. Im ersten Flächenelement 14 wird das s-polarisierte Licht 21 reflektiert, da der Gittervektor 16 (Fig. 3) und der Reliefvektor 17 (Fig. 3) im wesentlichen parallel zur Koordinate x ausgerichtet sind. Hingegen wird das s - polarisierte Licht 21 im zweiten Flächenelement 15 absorbiert, da der Gittervektor 16 parallel zur Koordinate x ausgerichtet ist und der Reliefvektor 17 (Fig. 5) einen im wesentlichen rechten Winkel zum Gittervektor 16 einschliesst. Das zweite Flächenelement 15 hebt sich daher als dunkle Fläche deutlich vom hellen ersten Flächenelement 14 ab.

In der Figur 8 ist das gleiche Flächenmuster 12 mit p - polarisiertem Licht 21 (Fig. 6) beleuchtet, das im ersten Flächenelement 14 absorbiert und im zweiten Flächenelement 15 reflektiert wird. Das zweite Flächenelement 15 hebt sich daher als helle Fläche deutlich von der dunklen Fläche des ersten Flächenelements 14 ab.

Mit Vorteil grenzen die beiden Flächenelemente 14, 15 aneinander, damit der Kontrast am deutlichsten sichtbar ist.

### Beispiel 1:

Die Gitterstruktur G(x) = 0,5 ξ h_{G} ξ sin(x) ist eine Sinusfunktion mit der Periode von 5.000 nm und einer optisch wirksamen Profilhöhe h_{G} = 450 nm. Die Reliefstruktur R(x) = 0,5 ξ h_{R} ξ sin(x) folgt ebenfalls einer Sinusfunktion mit einer Periode von 333 nm und einer optisch wirksamen Profilhöhe h_{R} = 185 nm. Für p - polarisiertes Licht 21 ist die Beugungseffizienz der Beugungsstruktur B(x) = G(x) + R(x) in allen Beugungsordnungen 23, 24 (Fig. 6) sehr klein, während für s - polarisiertes Licht 21 die Beugungsstruktur B(x) eine Beugungseffizienz in der dritten Deugunsordnung von über 10 % und in anderen Beugungsordnungen von mehr als 5 % aufweist.

### Beispiel 2:

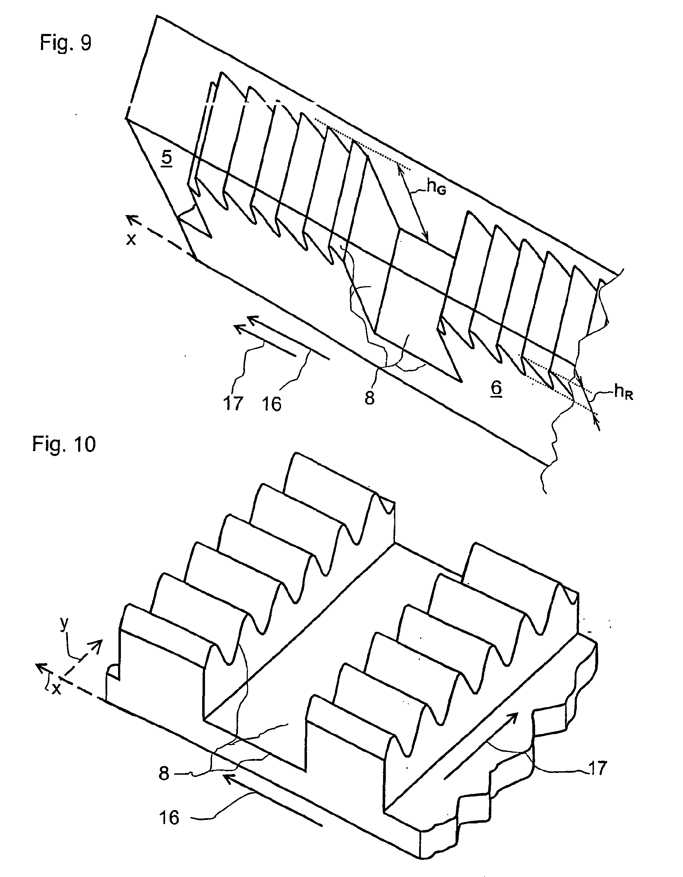

Die Beugungsstruktur B(x) in der Figur 9 ist eine multiplikative Überlagerung B(x) = G(x)ξ{R(x) + C}. Die Gitterstruktur G(x) ist eine Rechteckfunktion mit den Funktionswerten [0, h_{G}], einer Periode von 4.000 nm und einer optisch wirksamen Profilhöhe h_{G} = 320 nm. Die Reliefstruktur R(x) = 0,5 ξ h_{R} ξ sin(x) ist eine Sinusfunktion mit einer Periode von 250 nm und einer optisch wirksamen Profilhöhe h_{R} = 200 nm. C bezeichnet eine Konstante, wobei C = h_{G}- h_{R} ist. Der Gittervektor 16 und der Reliefvektor 17 sind parallel zur Koordinatenachse x. Die Grenzfläche 8 zwischen den Schichten 5, 6 ist auf den erhöhten Flächen der Rechteckstruktur mit der Reliefstruktur R(x) moduliert, während die Grenzfläche 8 auf dem Grund der Furchen der Rechteckstruktur glatt ist. Für p - polarisiertes Licht 21 (Fig. 6) ist die Beugungseffizienz der Beugungsstruktur B(x) ausser in der nullten Beugungsordnung in Richtung 22 in allen Beugungsordnungen 23, 24 (Fig. 6) sehr klein, während für s - polarisiertes Licht 21 die Beugungsstruktur B(x) nur in der +1. und der-1. Beugungsordnung eine hohe Beugungseffizienz aufweist.

In der Figur 10 erzeugt die multiplikative Überlagerung der rechteckförmigen Gitterstruktur G(x) mit der Reliefstruktur R(y) die in die Grenzfläche 8 abgeformte Beugungsstruktur B(x, y). Die Gitterstruktur G(x) und die Reliefstruktur R(y) besitzen die gleichen Parameter wie in der oben beschriebenen Beugungsstruktur B(x) mit der Ausnahme des Reliefvektors 17, der in die Richtung der Koordinate y statt x zeigt. Ausser in der nullten Beugungsordnung in Richtung 22 (Fig. 6) besitzt die Beugungsstruktur B(x, y) = G(x)ξ{R(y) + C} für s - polarisiertes Licht 21 sehr kleine Beugungseffizienzen in allen Beugungsordnungen 23, 24 (Fig. 6), während für p - polarisiertes Licht 21 (Fif. 6) die Beugungsstruktur B(x) nur in der +1. und der -1. Beugungsordnung eine hohe Beugungseffizienz aufweist.

Wenn (Fig. 5) die Beugungsstruktur B(x) im ersten Flächenelement 14 und die Beugungsstruktur B(x, y) im zweiten Flächenelement 15 wie weiter oben beschrieben angeordnet sind, zeigt das Flächenmuster 12 das Verhalten, das anhand der Figuren 5, 7 und 8 beschrieben ist.

Nach einer Drehung des Flächenmusters 12 (Fig. 5) in seiner Ebene unter Beibehaltung der Beleuchtungsrichtung und der Beobachtungsrichtung gelangt kein in die Beugungsordnungen 23, 24 gebeugtes Licht mehr ins Auge des Beobachters, solange der Gittervektor 16 aus der Beugungsebene weist. Wird das Sicherheitselement 2 (Fig. 6) so gekippt, dass der Beobachter Licht aus der Reflexionsrichtung 22 empfängt, so wird er das in die nullte Beugungsordnung gebeugte, farbige Licht sehen und bemerken, dass die Flächenhelligkeit der beiden Flächenelemente 14, 15 (Fig. 5) unabhängig vom Drehwinkel ist, vorausgesetzt, die Beleuchtung des Flächenmusters 12 erfolgt mit unpolarisiertem Licht. Erfolgt die Beleuchtung mit linear polarisiertem Licht 21 (Fig. 6) vertauschen sich die Flächenhelligkeiten der beiden Flächenelemente 14, 15 nach jeder Drehung um 90°.

Zurück zur Figur 2: Mit Vorteil wechseln sich im Flächenmuster 12 das erste Flächenelement 14 mit der Beugungsstruktur B(x, y, T = 0°) und das zweite Flächenelement 15 mit der Beugungsstruktur B(x, y, T = 90°) quer zu ihrer Längsausdehnung zyklisch ab. Dies ergibt im linear polarisierten Licht 21 (Fig. 6) ein auffälliges, die Echtheit bestätigendes Muster innerhalb des Flächenmusters 12. In der Zeichnung der Figur 2 entspricht z.B. im ersten Flächenelement 14 die Beugungsstruktur B(x, y, T = 0°), im zweiten Flächenelement 15 die Beugungsstruktur B(x, y, T = 90°), in einer Zone 25 die Beugungsstruktur B(x, y, T= 0°), in einer Aussenzone 26 die Beugungsstruktur B(x, y, T= 90°) usw.

Damit die Flächen der Flächenelemente 14, 15 und der Zonen 25, 26 gut mit dem unbewaffneten Auge sichtbar sind, weisen die länglichen Flächenelemente 13, 14, 15 bzw. die Zonen 25, 26 Querabmessungen von wenigstens 0,5 Millimetern auf.

Der Einfachheit halber sind bislang die Flächenmuster 12 mit wenigstens einem Flächenpaar [14, 15] aus dem ersten und dem zweiten Flächenelement 14, 15 betrachtet worden, wobei die Gittervektoren 16 (Fig. 3) der Gitterstrukturen G(x, y) in den beiden Flächenelementen 14, 15 entlang einer Richtung, z.B. der Koordinate x, ausgerichtet sind. In einer andern Ausführungsform des Sicherheitselements 2 können im Flächenmuster 12 eine Vielzahl von Flächenpaaren [14, 15] derart angeordnet sein, dass sich die Gittervektoren (16) jedes Flächenpaares [14, 15] von den Gittervektoren 16 der anderen Flächenpaare [14, 15] durch einen Winkel im Azimut unterscheiden.

Beispielsweise ist in einem Kreisringabschnitt 27 des Flächenmusters 12 ein Flächenpaar [14, 15] eingesetzt, dessen beide Gittervektoren 16 radial, d.h. leicht divergent, ausgerichtet sind. Ohne wesentliche Einbusse am beobachtbaren Effekt und der Sichtbarkeit der Beugungsstrukturen B(x, y, T) können die beiden Gittervektoren 16 des gleichen Flächenpaars [14, 15] einen Winkel im Azimut im Bereich von 0° bis 10° einschliessen. Um den vorbeschriebenen sichtbaren Effekt zu erreichen, ist es ausreichend, wenn die beiden Gittervektoren 16 des Flächenpaars [14, 15] nur im wesentlichen parallel, z.B. im Bereich von 0° bis 10°, ausgerichtet sind. In einer bevorzugten Ausführungsform sind die beiden Gittervektoren 16 des Flächenpaars [14, 15] parallel. Beispielsweise sind in einer anderen Ausführungsform auf einem Kreisring 28 die gleichen Kreisringabschnitte 27 nebeneinander angeordnet, wobei einem ersten Flächenelement 14 ein zweites Flächenelement 15 und dem wiederum ein erstes Flächenelement 14 usw. mit radial ausgerichteten Gittervektoren 16 folgt. Diese zyklische Anordnung hat den Vorteil, dass ungeachtet der Lage, die das Sicherheitselement 2 bei einer Drehung in seiner Ebene einnimmt, immer wenigstens ein erstes Flächenelement 14 und ein zweites Flächenelement 15 so ausgerichtet sind, dass sie für den Beobachter sichtbar sind und bei der Beleuchtung mit polarisiertem Licht 21 den oben beschriebenen Effekt aufweisen. Das erste Flächenelement 14 und das zweite Flächenelement 15 gehören entweder zu einem der Flächenpaare [14. 15] oder zu zwei auf dem Kreisring 28 benachbarten Flächenpaaren [14, 15].

## Patentansprüche

1. Sicherheitselement (2) aus einem Kunststofflaminat (1) mit einem mosaikartig aus Flächenelementen (13; 14; 15) zusammengesetzten Flächenmuster (12), wobei das Kunststofflaminat (1) eine zwischen einer Deckschicht (4) und einer Schutzschicht (6) angeordnete Abformschicht (5) und eine durch die Deckschicht (4) und die Abformschicht (5) hindurch einfallendes Licht (11) reflektierende Grenzfläche (8) zwischen der Abformschicht (5) und der Schutzschicht (6) aufweist und wobei an der Grenzfläche (8) optisch wirksame Strukturen (9) der Flächenelemente (13; 14; 15) in die Abformschicht (5) abgeformt sind, wobei
im Flächenmuster (12) wenigstens ein aus einem ersten Flächenelement (14) und einem zweiten Flächenelement (15) gebildetes Flächenpaar (14,15) angeordnet ist,
**dadurch gekennzeichnet,**
**dass** die beiden Flächenelemente (14; 15) je eine aus einer Überlagerung einer Gitterstruktur {G(x, y)} mit einer Reliefstruktur {R(x, y)} erzeugte Beugungsstruktur {B(x, y, T)} aufweisen,
**dass** im ersten Flächenelement (14) ein Gittervektor (16) der Gitterstruktur {G(x, y)} und ein Reliefvektor (17) der Reliefstruktur {R(x, y)} im wesentlichen parallel sind und im zweiten Flächenelement (15) der Gittervektor (16) der gleichen Gitterstruktur {G(x, y)} und der Reliefvektor (17) der gleichen Reliefstruktur {R(x, y)} einen im wesentlichen rechten Winkel einschliessen,
**dass** die Gittervektoren (16) der Gitterstrukturen {G(x, y)} in den beiden Flächenelementen (14; 15) im wesentlichen parallel sind,
**dass** eine Relief - Spatialfrequenz (f_{R}) der beiden Reliefstrukturen {R(x, y)} grösser als 2.500 Linien/Millimeter ist und
**dass** die Relief - Spatialfrequenz (f_{R}) wenigstens zehnmal höher als eine Gitter - Spatialfrequenz (f_{G}) der beiden Gitterstrukturen {G(x, y)} ist.

2. Sicherheitselement nach Anspruch 1,
**dadurch gekennzeichnet,**
**dass** die Gitter - Spatialfrequenz (f_{G}) der Gitterstruktur {G(x, y)} einen Wert aus dem Bereich von 100 Linien/Millimeter bis 500 Linien/Millimeter aufweist.

3. Sicherheitselement nach einem der Ansprüche 1 bis 2,
**dadurch gekennzeichnet ,**
**dass** die reflektierende Grenzfläche (8) von einer metallischen Schicht mit hoher elektrischer Leitfähigkeit gebildet ist.

4. Sicherheitselement nach einem der Ansprüche 1 bis 3,
**dadurch gekennzeichnet ,**
**dass** die Reliefstruktur {R(x, y)} eine Sinusfunktion ist.

5. Sicherheitselement nach einem der Ansprüche 1 bis 4,
**dadurch gekennzeichnet ,**
**dass** die Gitterstruktur {G(x, y)} eine Sinusfunktion ist.

6. Sicherheitselement nach Anspruch 5,
**dadurch gekennzeichnet,**
**dass** eine optische Profilhöhe (h_{G}) der Gitterstruktur {G(x, y)} einen Wert aus dem Bereich von 350 nm bis 550 nm aufweist, und dass die optische Profilhöhe (h_{G}) der Gitterstruktur {G(x, y)} wenigstens doppelt so gross wie die optische Profilhöhe (h_{R}) der Reliefstruktur {R(x, y)} ist.

7. Sicherheitselement nach einem der Ansprüche 1 bis 4,
**dadurch gekennzeichnet,**
**dass** die Gitterstruktur {G(x, y)} eine Rechteckfunktion ist.

8. Sicherheitselement nach Anspruch 7,
**dadurch gekennzeichnet ,**
**dass** eine optische Profilhöhe (h_{G}) der Gitterstruktur {G(x, y)} einen Wert aus dem Bereich von 250 nm bis 400 nm aufweist, und dass die optische Profilhöhe (h_{G}) der Gitterstruktur {G(x, y)} wenigstens um 100 nm grösser wie die optische Profilhöhe (h_{R}) der Reliefstruktur {R(x, y)} ist.

9. Sicherheitselement nach einem der Ansprüche 1 bis 4,
**dadurch gekennzeichnet ,**
**dass** die Gitterstruktur {G(x, y)} eine symmetrische oder asymmetrische Sägezahnfunktion ist.

10. Sicherheitselement nach einem der Ansprüche 1 bis 9,
**dadurch gekennzeichnet ,**
**dass** zum Verbinden mit einem Substrat (3) auf der Schutzschicht (6) eine Kleberschicht (7) angebracht ist.

## Claims

1. Security element (2) made of a plastic laminate (1) having a surface pattern (12) which is composed of surface elements (13; 14; 15) in a tessellate manner, wherein the plastic laminate (1) has a moulded layer (5), arranged between a cover layer (4) and a protective layer (6), and an interface (8) between the moulded layer (5) and the protective layer (6), which interface reflects light (11) incident through the cover layer (4) and the moulded layer (5), and wherein optically active structures (9) of the surface elements (13; 14; 15) are moulded into the moulded layer (5) at the interface (8), wherein at least one surface pair (14, 15), which is formed from a first surface element (14) and a second surface element (15), is arranged in the surface pattern (12), **characterized in that** the two surface elements (14; 15) have in each case one diffraction structure {B(x, y, T)} produced from an overlay of a grating structure {G(x, y)} with a relief structure {R(x, y)}, **in that** in the first surface element (14), a grating vector (16) of the grating structure {G(x, y)} and a relief vector (17) of the relief structure {R(x, y)} are substantially parallel and, in the second surface element (15), the grating vector (16) of the same grating structure {G(x, y)} and the relief vector (17) of the same relief structure ({R(x, y)} form a substantially right angle, **in that** the grating vectors (16) of the grating structures {G(x, y)} in the two surface elements (14 ; 15) are substantially parallel, **in that** a relief spatial frequency (f_{R}) of the two relief structures {R(x, y)} is greater than 2500 lines/millimetre and **in that** the relief spatial frequency (f_{R}) is at least ten .times higher than a grating spatial frequency (f_{G}) of the two grating structures {G(x, y)}.

2. Security element according to Claim 1, **characterized in that** the grating spatial frequency (f_{G}) of the grating structure {G (x, y) } has a value from the range from 100 lines/millimetre to 500 lines/millimetre.

3. Security element according to either of Claims 1 and 2, **characterized in that** the reflective interface (8) is formed by a metallic layer with a high electric conductivity.

4. Security element according to one of Claims 1 to 3, **characterized in that** the relief structure {R(x, y)} is a sine function.

5. Security element according to one of Claims 1 to 4, **characterized in that** the grating structure {G(x, y)} is a sine function.

6. Security element according to Claim 5, **characterized in that** an optical profile height (h_{G}) of the grating structure {G(x, y)} has a value from the range from 350 nm to 550 nm and **in that** the optical profile height (h_{G}) of the grating structure {G (x, y)} is at least twice as large as the optical profile height (h_{R}) of the relief structure {R (x, y)}.

7. Security element according to one of Claims 1 to 4, **characterized in that** the grating structure {G(x, y)} is a rectangular function.

8. Security element according to Claim 7, **characterized in that** an optical profile height (h_{G}) of the grating structure {G (x, y)} has a value from the range from 250 nm to 400 nm and **in that** the optical profile height (h_{G}) of the grating structure {G(x, y)} is larger at least by 100 nm than the optical profile height (h_{R}) of the relief structure (R(x, y)}.

9. Security element according to one of Claims 1 to 4, **characterized in that** the grating structure {G(x, y)} is a symmetrical or asymmetrical sawtooth function.

10. Security element according to one of Claims 1 to 9, **characterized in that** an adhesive layer (7) is affixed for connecting to a substrate (3) on the protective layer (6).

## Revendications

1. Élément de sécurité (2) en un laminé de plastique (1) avec un motif de surface (12) assemblé en éléments de surface (13 ; 14 ; 15) à la manière d'une mosaïque, dans lequel le laminé de plastique (1) comporte une couche de moulage (5) disposée entre une couche de couverture (4) et une couche de protection (6) et une couche limite (8) entre la couche de moulage (5) et la couche de protection (6), réfléchissant la lumière incidente (11) passant à travers la couche de couverture (4) et la couche de moulage (5), et dans lequel, sur la couche limite (8), des structures (9) optiquement efficaces des éléments de surface (13 ; 14 ; 15) sont moulées dans la couche de moulage (5), sachant qu'au moins une paire de surfaces (14, 15) formée en un premier élément de surface (14) et en un deuxième élément de surface (15) est disposée dans le motif de surface (12),
**caractérisé en ce que**
les deux éléments de surface (14, 15) présentent chacun une structure de diffraction {B(x, y, T)} engendrée à partir d'une superposition d'une structure en grille {G(x, y)} avec une structure en relief {R(x, y)},
**en ce que**, dans le premier élément de surface (14), un vecteur de grille (16) de la structure en grille {G(x, y)} et un vecteur de relief (17) de la structure en relief {R(x, y)} sont sensiblement parallèles, et **en ce que** dans le deuxième élément de surface (15), le vecteur de grille (16) de la même structure en grille {G(x, y)} et le vecteur de relief (17) de la même structure en relief {R(x, y)} limitent un angle sensiblement droit,
**en ce que** les vecteurs de grille (16) de la structure en grille {G(x, y)} dans les deux éléments de surface (14, 15) sont sensiblement parallèles,
**en ce qu'**une fréquence spatiale du relief (f_{R}) des deux structures en relief {R(x, y)} est supérieure à 2.500 lignes par millimètre et
**en ce que** la fréquence spatiale du relief (f_{R}) est au moins dix fois plus grande qu'une fréquence spatiale de grille (f_{G}) des deux structures en grille {G(x, y)}.

2. Élément de sécurité selon la revendication 1,
**caractérisé en ce que**
la fréquence spatiale de grille (f_{G}) de la structure en grille {G(x, y)} présente une valeur prise dans l'intervalle de 100 lignes/millimètre à 500 lignes/millimètre.

3. Élément de sécurité selon l'une quelconque des revendications 1 à 2,
**caractérisé en ce que**
la couche limite réfléchissante (8) est formée par une couche métallique avec une haute conductivité électrique.

4. Élément de sécurité selon l'une quelconque des revendications 1 à 3,
**caractérisé en ce que**
la structure en relief {R(x, y)} est une fonction sinusoïdale.

5. Élément de sécurité selon l'une quelconque des revendications 1 à 4,
**caractérisé en ce que**
la structure en grille {G(x, y)} est une fonction sinusoïdale.

6. Élément de sécurité selon la revendication 5,
**caractérisé en ce que**
une hauteur optique de profil (h_{G}) de la structure en grille {G(x, y)} présente une valeur dans l'intervalle de 350 nm à 550 nm et **en ce que** la hauteur optique de profil (hG) de la structure en grille {G(x, y)} est au moins deux fois plus grande que la hauteur optique de profil (hR) de la structure en relief {R(x, y)}.

7. Élément de sécurité selon l'une quelconque des revendications 1 à 4,
**caractérisé en ce que**
la structure en grille {G(x, y)} est une fonction rectangulaire.

8. Élément de sécurité la revendication 7,
**caractérisé en ce que**
la hauteur optique de profil (h_{G}) de la structure en grille {G(x, y)} présente une valeur dans l'intervalle de 250 nm à 400 nm, et **en ce que** la hauteur optique de profil (h_{G}) de la structure en grille {G(x, y)} est d'au moins 100 nm plus grande que la hauteur optique de profil (h_{R}) de la structure en relief {R(x, y)}.

9. Élément de sécurité selon l'une quelconque des revendications 1 à 4,
**caractérisé en ce que**
la structure en grille {G(x, y)} est une fonction en dents de scie symétrique ou asymétrique.

10. Élément de sécurité selon l'une quelconque des revendications 1 à 9,
**caractérisé en ce que**
une couche de colle (7) est appliquée sur la couche de protection (6) pour la liaison avec un substrat (3).
